# EUROPEAN PATENT APPLICATION

(11) **EP 0 999 512 A2**
(43) Date of publication of application: **10.05.2000**
(21) Application number: 99121776.1
(22) Date of filing: 03.11.1999
(51) Int. Cl.: G06K 7/00

(54) **A contact block and a switch therfor**

(30) Priority: 03.11.1998 DE 19850646
(71) Applicant: AMPHENOL-TUCHEL ELECTRONICS GmbH, D-74080 Heilbronn (DE)
(72) Inventor: Heim, Michael, 74078 Heilbronn (DE)
(74) Representative: Wagner, Karl H., Dipl.-Ing.

(57) **Abstract**

A contact block (100) for a chip card, in particular for a SIM card (12), said contact block (100) comprising a contact frame (3); reading contact elements (4) mounted in said contact frame (3); and a switching contact element (2) mounted in said contact frame (3), said switching contact element (2) supporting an electrically insulating means at least in its area which is provided for contacting contact zones of said SIM card (12).

## Description

### Field of the Invention

The present invention relates to a contact block and to a card presence switch for such a contact block forming a smart card or SIM-card reader. Such a SIM-card reader can also be referred to as a SIMLOCK ® . A contact block comprises a contact frame and contact elements carried in said contact frame and adapted to contact the contact zones or pads of a SIM card or a smart card. A card presence switch is typically opened or closed so as to give an indication of the presence of a smart card or a SIM-card in the reader. For instance, the presence of a card in its reading position, i.e. a position where so-called reading contact elements of the card reader are in contact with the respective contact pads or contact zones of the smart card or SIM card.

### Background of the Invention

Contact blocks for smart and SIM-cards including those having an end position or card presence switch are known. An end position switch is adapted to provide an indication that a chip card is located in the reading position. EP 0 656598A1 relates to a contact frame for a smart-card. The contact frame comprises first and second sets of reading contact elements, i.e. contact elements adapted for contact engagement with the contact zones on a smart card so as to typically read information stored in the chip in said smart-card. Also, a first detection contacting arm and a second detection contact arm are provided. The first detection contact arm comprises an abutment region adapted to mechanically cooperate with the card such that when the card is placed at its location with respect to the contact frame, the first and second detection contact arms come into electrical contact engagement. An electrically insulating region is disposed on an upper face of the first arm at least in said abutment region. Preferably, the electrically insulating region is an insulating arm formed as a single piece with the contact frame. The contact frame is preferably characterized in that the first and second detection contact arms are respectively disposed in the first and second sets and are located oppositely with respect to each other with at least the first contact arm having a length larger than the length of the contact elements. Attention is further drawn to DE 197 04 591.

It is known that the presence of a chip card or smart card(dimensions 85,6 mm x 54 mm x 0,76 mm) is determined at one of the outer edges of the card by means of an end position switch which is clearly outside of the area of the contact zones or contact pads of the smart-card reader. For a SIM card (dimensions 25mm x 15 mm x 0,76 mm) the chip has more or less the same size as the card. Due to the small size of a contact block or SIM-card reader for such a SIM card the provision of an end position switch and its switching contact element(s) is difficult.

It is an object of the present invention to provide a contact block or a reader (contact apparatus) for a smart card in particular however for a SIM card with a position or card presence switch such that a small size for the contact block or a card reader in particular a SIM-card reader (or a contact block therefor) can be maintained.

It is a further object of the present invention to provide a card presence switch such that the chip which is contained in the card, in particular the SIM card, is not destroyed because of electrical effects at the time the presence of the card is detected, i.e. the card presence switch is actuated.

### Summary of the Invention

The present invention resides in a smart card or more specifically a SIM-card contact block or a reader wherein a card presence switch comprising preferably a single switching contact frame or contact element forming the card presence (or end position) switch is located in the contact element support and within the area of the chip, i.e. the area defined by the contact pads or zones of the chip. Said single switching contact element is adapted to cooperate with a contact zone located preferably on a printed circuit board on which the contact block is mounted.

Preferably, the switching contact element is manufactured together with the reading contact elements and also with the same lateral spacing from said reading contact elements.

Preferably, the card presence switch comprises an elongate switching contact element adapted to cooperate preferably with a gilded switching zone, i.e. an electrical contact preferably located on a printed circuit board.

In accordance with the invention the switching contact element itself is insulated, i.e. comprises insulating material at least in an area facing towards the contact zones of the SIM card.

In accordance with the present invention a contact block for a SIM card is provided, which comprises a contact frame adapted to be mounted on a printed circuit board. Reading contact elements and at least one switching contact element are mounted in said contact element frame or support. Preferably, the switching contact element is arranged within the area defined by the contact zones of the card.

### Description of the Drawings

The present invention and its advantages will become more apparent from the following description with reference to the accompanying drawings, in which:
- Figure 1: is a side-elevational view of a first embodiment of a SIM-card reader;
- Figure 2: is a top-plan view of the SIM-card reader of figure 1; and
- Figure 3: is a partial view along line C-D in figure 2.

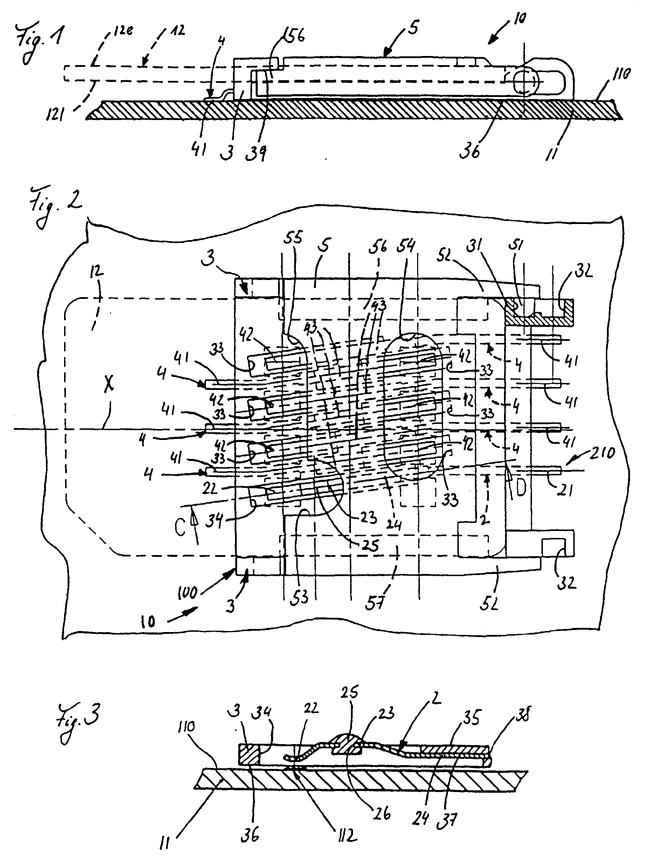

Figures 1 and 2 disclose a SIM-card reader 10 which is frequently referred to as a SIMLOCK ®. The SIM-card reader 10 comprises a contact element support (short: a contact support or contact frame) 3 carrying reading contact elements 4 and a cover 5 pivotally mounted at said contact support 3. The cover 5 comprises pivot pins 51 which are formed integrally with said cover 5. The contact element support 3 together with reading elements 4 will also be called a contact block 100. As is shown schematically, the SIM-card reader 10 comprises six reading contact elements 4 which are preferably (partially) angled with respect to a longitudinal axis X of the reader 10. The reading contact elements 4 are fixedly mounted in the contact frame 3.

Preferably, said cover 5 is pivotally mounted at the contact frame 3 and is provided with support means 56, 57 defining a space adapted to receive a SIM-card 12 during insertion into said cover 5. After a SIM card 12 has been inserted into the cover 5, the cover 5 is pivoted into its closed position. By sliding the cover 5 leftward (Figures 1 and 2) the cover 5 will reach its locked position shown in Figure 1 and 2.

In said locked position the cover 5 abuts at an upper surface 120 of the SIM card 12 and presses said SIM card 12 with its contacting zones (not shown) against contact portions 42 of the reading contact elements 4.

As shown in Figures 1 and 2 the cover 5 comprises a cover portion 156 which can be locked below an abutment surface 39 of the contact frame 3 after the cover 5 has been moved (leftward in Figure 1) in longitudinal direction into the locked position shown in Figures 1 and 2. The pivot pins 51 are arranged at cover arms 52 of the cover 5. The pins 51 are adapted to be inserted into recesses 31, 32 provided at both sides of the contact frame 3.

The contact frame 3 is adapted to be mounted on a printed circuit board 11 such that a lower surface 36 of the contact frame 3 touches an upper surface 110 of the printed circuit board 11. The contact frame 3 can be mounted in different ways at said printed circuit board 11, as is known in the prior art.

Each of said six reading contact elements 4 comprises first end portions 41 which are adapted to be connected to conductive paths (not shown) on the upper surface 110 of the printed circuit board 11 (see figures 1 and 2). Generally the first end portions 41 of the respective reading contact elements 4 are soldered to said conducting paths. Intermediate portions 43 of each of said contact elements 4 are mounted in said contact frame 3 which is made of insulating material. Each intermediate portion 43 could be inserted into the contact frame 3. The intermediate portions 43 could also be injection moulded into said contact frame 3. Recesses 33 are formed in the contact frame 3 so that the contact element can move "downwardly".

As shown in Figure 2 in addition to the reading contact elements 4 preferably one card presence switching contact element 2 is provided in the contact element support or frame 3. In the disclosed embodiment the switching contact element 2 has the same spacing with respect to the reading contact elements 4 as have the reading contact elements amongst themselves.

Thus, preferably the switching contact element 2 can be stamped together with the reading contact elements 4 in a one-step of operation from a sheet metal. There is also only a one step of operation necessary for placing the reading contact elements together with the switching contact element in an injection moulding tool when manufacturing the contact frame 3 by injection moulding, thus obtaining the contact block 100.

Figure 3 discloses a slightly enlarged sectional view along line C-D in Figure 2 without the cover 5 and without an inserted SIM card 12. A first end portion 21 (Figure 2) of the switching contact element 2 is connected at a contacting location 210 with a contact region (not shown) on the upper surface 110 of the printed circuit board 11 similarly to the reading contact elements 4. A second end portion 22 of the switching contact element 2 is the contacting portion. Between the first end portion 21 and the second end portion 22 an actuating portion 23 is provided.

When the SIM card 12 is in its locked position, i.e. the cover 5 is locked to the contact frame 3 or contact block 100 as shown in figures 1 and 2, the switching contact element 2 is in abutment with the lower surface 121 of the SIM card 12 with the actuating portion 23 as it is shown in figure 3. The actuating portion 23 extends beyond an upper surface 35 of the contact frame 3 if no card is present. Due to the fact that the SIM card 12 is locked by means of the cover 5 in the SIM-card reader 10, the actuating portion 23 is firmly pushed "downwardly". To provide for space for the movement of the switching contact element 2 a recess 34 is formed in the contact frame 3.

At the time the switching contact element 2 is actuated, i.e. at the time it is pressed downwardly by means of a smart card or a SIM card 12, the second end portion 22 which serves as a contact portion comes into contact or into engagement with a contact zone or field 112 on the upper surface 110 of the printed circuit board 11. Thus an electrical connection is provided between the connecting location 210 of the first end portion 21 (with the printed circuit board 11) and the contact zone 112 on the printed circuit board 11. This connection indicates the presence of a SIM-card 12. A card presence switch of the type shown in the embodiment of figures 2 and 3 is called a "closing" card presence switch inasmuch as the switch closes a circuit when a SIM card is inserted in the SIM-card reader 10. The present invention, however, is likewise useful for a card presence switch of the type where a circuit is opened by the insertion of a card into the SIM-card reader 10. In accordance with the invention there is preferably only one switching contact element 2 in the contact block 100 to form a card presence switch. The other contact is preferably on the circuit board and is in e.g. in the form of the contact zone 112.

So as to avoid an electrical connection between the SIM card 12, in particular the contact zones thereof, and the end portions 21 and 22 and also with the printed circuit board at the actuating portion 23 of the switching contact element 2 an electrically insulating means e.g. an electrically insulating material is provided on the switching contact element 2. For instance the insulating material is provided in the form of an insulating member 25. In the embodiment shown in figure 3 the insulation member 25 is in the shape of a mushroom and is located with a small diameter portion in a small opening 26 in the switching contact element 2. In this manner the insulating member 25 is fixedly mounted for support at the actuating portion 23. It is also possible to use instead of an insulating member 25 an insulating cover or an insulating lacquer coated onto said actuating member 23. Also, an insulating adhesive could be applied to the switching contact element and then cured.

When a SIM card 12 is removed from the SIM-card reader 10 the switching contact element 2 returns due to its resiliency to the position shown in figure 3. It is noted that the switching contact element 2 comprises an intermediate portion 24. This intermediate portion 24 is biased, in the non-actuated position of the switching element, against abutment surface 37, 38 in the contact element support 3. The free space provided by recess 34 and the location of an insulating means on the switching contact element 2 allows a largely unimpeded contact movement of the switching contact element 2.

It should be added that figure 2 discloses said in accordance with a preferred embodiment the cover 4 comprises openings 53, 54, and 55 which are located in the area of the second end portions 22 and 42 of the reading contact elements 4 and the switching contact element 3, respectively. The cover can have any kind of shape as is known in the prior art.

It should be noted that the objects and advantages of the invention may be attained by means of any compatible combination(s) particularly pointed out in the items of the following summary of the invention and the appended claims.

### SUMMARY OF THE INVENTION

1. A contact block (100) for a chip card, in particular for a SIM card (12), said contact block (100) comprising:
   a contact frame (3);
   reading contact elements (4) mounted in said contact frame (3); and a switching contact element (2) mounted in said contact frame (3), said switching contact element (2) supporting an electrically insulating means at least in its area which is provided for contacting contact zones of said SIM card (12).
2. Contact element support (10) according wherein the switching contact element (3) comprises an actuating portion (23) adapted to be actuated by said card (12), said actuating portion (23) being electrically insulated, by said insulating means provided on said switching contact element (2).
3. Contact element support (10) wherein only one switching contact element (2) is provided and comprises a first end portion (21) adapted to be connected with a printed circuit board by means of a second, a contact portion (22) which contacts the printed circuit board at a contact zone (112) when said switching contact element (2) is actuated by said SIM card.
4. Contact element support (10) wherein the actuating portion (23) is provided between the first end portion (21) and the contact portion (22) of the switching contact element (2).
5. Contact element support (10) wherein the reading contact elements (4) are arranged with a predetermined spacing in said contact frame (3).
6. Contact element support (10) wherein the switching contact element (2) is arranged with the same spacing as is selected for the reading contact elements.
7. Contact element support (10) wherein the reading contact elements (4) and the switching contact element(s) (2) are mounted by injection moulding in said contact element support (10).
8. Contact element support (10) wherein the area of the switching contact element (2) provided for being contacted by said SIM card is electrically insulated by a coating of an electrically insulating lacquer.
9. Contact element support (10) wherein the area of the switching contact element (2) which is provided for being contacted by said SIM card is insulated by means of a layer of an electrically insulating adhesive which is cured.
10. Contact element support (10) wherein the area of the contacting element (2) provided for being contacted by said SIM card is electrically insulated by a member (25) of insulating material which is used also for forming the contact element support.
11. Contact element support (10) wherein the contact zone (112) on the printed circuit board 11 is a gilded switching or contacting surface.

## Claims

1. A contact block (100) for a chip card, in particular for a SIM card (12), said contact block (100) comprising:
a contact frame (3);
reading contact elements (4) mounted in said contact frame (3); and a switching contact element (2) mounted in said contact frame (3), said switching contact element (2) supporting an electrically insulating means at least in its area which is provided for contacting contact zones of said SIM card (12).

2. Contact element support (10) according to claim1, wherein the switching contact element (3) comprises an actuating portion (23) adapted to be actuated by said card (12), said actuating portion (23) being electrically insulated, by said insulating means provided on said switching contact element (2).

3. Contact element support (10) of claims 1, wherein only one switching contact element (2) is provided and comprises a first end portion (21) adapted to be connected with a printed circuit board by means of a second, a contact portion (22) which contacts the printed circuit board at a contact zone (112) when said switching contact element (2) is actuated by said SIM card.

4. Contact element support (10) of claim 3, wherein the actuating portion (23) is provided between the first end portion (21) and the contact portion (22) of the switching contact element (2).

5. Contact element support (10) of claim 1, wherein the reading contact elements (4) are arranged with a predetermined spacing in said contact frame (3).

6. Contact element support (10) of claim 5, wherein the switching contact element (2) is arranged with the same spacing as is selected for the reading contact elements.

7. Contact element support (10) of claim 1, wherein the reading contact elements (4) and the switching contact element(s) (2) are mounted by injection moulding in said contact element support (10).

8. Contact element support (10) of claim 1, wherein the area of the switching contact element (2) provided for being contacted by said SIM card is electrically insulated by a coating of an electrically insulating lacquer.

9. Contact element support (10) of claim 1, wherein the area of the switching contact element (2) which is provided for being contacted by said SIM card is insulated by means of a layer of an electrically insulating adhesive which is cured.

10. Contact element support (10) of any of the preceding claims wherein the area of the contacting element (2) provided for being contacted by said SIM card is electrically insulated by a member (25) of insulating material which is used also for forming the contact element support,
and/or wherein preferably the contact zone (112) on the printed circuit board 11 is a gilded switching or contacting surface.
